(19) Europäisches Patentamt
European Patent Office
Office européen des brevets

(11) **EP 4 060 907 A1**

(12) **EUROPEAN PATENT APPLICATION**
published in accordance with Art. 153(4) EPC

(43) Date of publication:
**21.09.2022   Bulletin 2022/38**

(21) Application number: **20892074.4**

(22) Date of filing: **12.11.2020**

(51) International Patent Classification (IPC):
**H04B 10/293** *(2013.01)*

(52) Cooperative Patent Classification (CPC):
**H04B 10/293; H04Q 11/00**

(86) International application number:
**PCT/CN2020/128439**

(87) International publication number:
**WO 2021/104036 (03.06.2021 Gazette 2021/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **25.11.2019   CN 201911167207**

(71) Applicant: **ZTE Corporation
Shenzhen, Guangdong 518057 (CN)**

(72) Inventor: **MA, Zhimin
Shenzhen, Guangdong 518057 (CN)**

(74) Representative: **Canzler & Bergmeier
Patentanwälte
Partnerschaft mbB
Despag-Straße 6
85055 Ingolstadt (DE)**

(54) **RELAY CONFIGURATION METHOD, APPARATUS AND DEVICE, AND STORAGE MEDIUM**

(57)     Disclosed are a relay configuration method, apparatus and device, and a storage medium. The method comprises: according to an acquired network topological graph, determining an aggregated optical amplifier signal-to-noise ratio corresponding to a sub-route in the network topological graph; according to the aggregated optical amplifier signal-to-noise ratio corresponding to the sub-route, determining an aggregated optical amplifier signal-to-noise ratio corresponding to a temporary route; and according to the aggregated optical amplifier signal-to-noise ratio corresponding to the temporary route, determining a configuration range of a relay, such that a target service station for configuring the relay is determined within the configuration range according to a hybrid-path optical amplifier signal-to-noise ratio corresponding to the temporary route. Comparing the embodiment of the present application with the related prior art, the configuration range of the relay is determined by using the aggregated optical amplifier signal-to-noise ratio, and within the configuration range, the target service station is further determined according to the hybrid-path optical amplifier signal-to-noise ratio, thus the number of relays is reduced, and network cost is lowered while normal transmission of services is guaranteed.

Determine a signal-to-noise ratio of an aggregated optical amplifier corresponding to a sub-route in the network topological graph according to an acquired network topological graph — S110

Determine a signal-to-noise ratio of an aggregated optical amplifier corresponding to a temporary route according to a signal-to-noise ratio of an aggregated optical amplifier corresponding to a sub-route — S120

Determine a range for a configuration relay according to the signal-to-noise ratio of the aggregated optical amplifier corresponding to the temporary route, so as to determine a target service station for relay configuration within the range according to signal-to-noise ratio of a hybrid-path optical amplifier corresponding to the temporary route — S130

FIG. 1

EP 4 060 907 A1

**Description**

**TECHNICAL FIELD**

Embodiments of the present application relate to the technical field of optics communication, and in particular to relay configuration method apparatus and device and storage medium.

**BACKGROUND**

In the field of optics communication, with the development of wavelength division multiplexing (WDM) optical networks, more and more services are carried by WDM networks, and more and more service stations have demands for up and down of services with various directions. In order to realize the on and off, and scheduling of the services with various directions, a large number of single boards and optical amplifiers with routing or wavelength multiplexing/demultiplexing are introduced. The optical amplifiers are deployed to compensate the insertion loss of single boards. However, noise is also introduced.

The transmission performance between service stations in the WDM network has an important impact on the layout and construction of the network. Under specific transmission performance constraints, the optical signal noise ratio (OSNR) is an important index for measuring the transmission performance. In WDM systems, the optical modules selected for a certain service each have an OSNR limit value, that is, the minimum OSNR value for a service signal that can be successively parsed at the service receiver. In case a received service signal has an OSNR value less than the OSNR limit value, the receiver cannot correctly parse the service signal, so it's not possible for the service to be transmitted properly. It is possible to solve this problem by providing relays at the service station to enable the OSNR value at the service receiver to be increased above the OSNR limit value.

The conventional relay configuration method can ensure that the OSNR value at the service receiver is greater than the OSNR limit value with a large number of relays to be arranged, and the network cost is increased.

**SUMMARY**

Embodiments of the present application provide a relay configuration method, a device, an apparatus, and a storage medium, to decrease the number of relays to be arranged and save the network cost.

According to an aspect of the present application, there is provided a delay configuration method, which includes,

determining, according to an acquired network topological graph, a signal-to-noise ratio of an aggregated optical amplifier corresponding to a sub-route in the network topological graph;

determining, according to the signal-to-noise ratio of the aggregated optical amplifier corresponding to the sub-route, a signal-to-noise ratio of an aggregated optical amplifier corresponding to a temporary route, the temporary route being determined according to the sub-route; and

determining a range for a relay configuration according to the signal-to-noise ratio of the aggregated optical amplifier corresponding to the temporary route, so as to determine a target service station for the relay configuration within the range according to a signal-to-noise ratio of a hybrid-path optical amplifier corresponding to the temporary route.

According to another aspect of the present application, there is further provided a delay configuration device, which includes,

a sub-route signal-to-ratio determination module configured to determine, according to an acquired network topological graph, a signal-to-noise ratio of an aggregated optical amplifier corresponding to a sub-route in the network topological graph;

a temporary route signal-to-noise ratio determination module configured to determine, according to the signal-to-noise ratio of the aggregated optical amplifier corresponding to the sub-route, a signal-to-noise ratio of an aggregated optical amplifier corresponding to a temporary route determined according to the sub-route; and

a target service station determination module configured to determine a range for a relay configuration according to the signal-to-noise ratio of the aggregated optical amplifier corresponding to the temporary route, so as to determine a target service station for the relay configuration within the range according to a signal-to-noise ratio of a hybrid-path optical amplifier corresponding to the temporary route.

According to yet another aspect of the present application, there is further provided an apparatus, which includes,

at least one processor; and

a memory configured to store at least one program;
the program, when executed by the processor, causes the processor to carry out the relay configuration method described in the above aspect.

According to yet another aspect of the present application, there is further provided a storage medium having at least one computer program stored thereon which, when executed by a processor, causes the processor to carry out the relay configuration method described in the above aspect.

**BRIEF DESCRIPTION OF DRAWINGS**

FIG. 1 shows a flowchart of a relay configuration method according to an embodiment of the present application;
FIG. 2 shows a schematic diagram of a network topological graph according to an embodiment of the present application;
FIG. 3 shows a flowchart of another relay configuration method according to an embodiment of the present application;
FIG. 4 shows a flowchart of another relay configuration method according to an embodiment of the present application;
FIG. 5 shows a schematic diagram of a relay configuration device according to an embodiment of the present application; and
FIG. 6 shows a schematic diagram of an apparatus according to an embodiment of the present application.

**DETAILED DESCRIPTION**

The present application will be further described below in detail by embodiments with reference to the accompanying drawings. It should be understood that the specific embodiments described herein are merely used for explaining the present application, rather than limiting the present application. In addition, it is to be noted that, for convenience of description, only some but not all of the structures related to the present application are shown in the accompanying drawings. In addition, the embodiments in the present application and the features in the embodiments can be combined with each other if not conflicted.

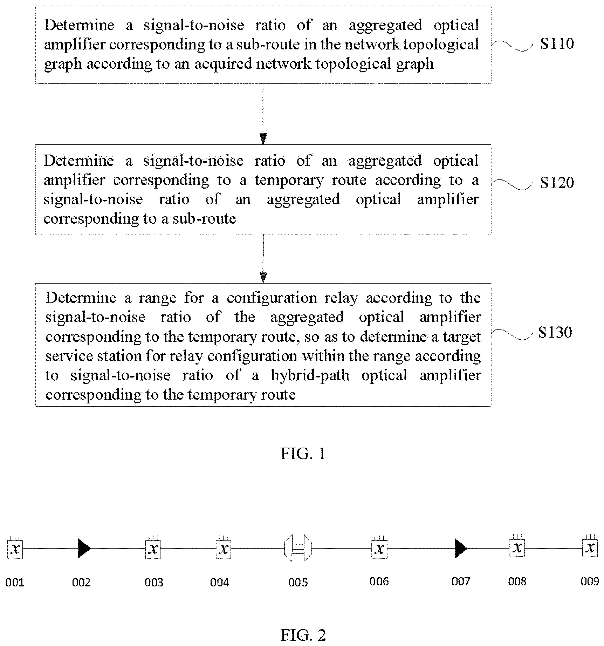

FIG. 1 shows a flowchart of a relay configuration method according to an embodiment. This embodiment can be applied to a situation where the normal transmission of services is ensured by configuring relays. This method may be performed by a relay configuration device. The device may be implemented as software and/or hardware, and may be arranged in a laptop computer, a palmtop computer, or the like. With reference to FIG. 1, the method may include the following operations of S110 to S130.

At S 110, a signal-to-noise ratio of an aggregated optical amplifier corresponding to a sub-route in the network topological graph is determined according to an acquired network topological graph.

In an example, the network topological graph on which this embodiment is based is shown in FIG. 2. The network topological graph shows that an operating route of a service is from stations 001 to 009, where stations 001, 003, 004, 005, 006, 008 and 009 are service stations; stations 001 and 009 are a transmitting station and a receiving station of this service, respectively; and, stations 002 and 007 are optical line amplifier (OLA) stations, i.e., non-service stations. The service stations 003, 004, 005 and 006 are stations that can be configured with relays, and the non-service stations 002 and 007 are stations that cannot be configured with relays. A service route in the network topological graph is 001-(002)-003-004-005-006-(007)-008-009.

Sub-routes are formed by connections of neighboring or nearest service stations as end stations in the network topological graph. With reference to FIG. 2, the sub-routes are 001-(002)-003, 003-004, 004-005, 005-006, 006-(007)-008 and 008-009, respectively. By taking the sub-route 001-(002)-003 as an example, since 002 is a non-service station and the service station nearest to the service station 001 is 003, and therefore, stations 001, 002 and 003 are connected to form the sub-route. The sub-route 006-(007)-008 is formed in a similar manner.

Optical amplifiers are deployed to increase the power of service signals during the optical transmission process. Depending on the position of optical amplifiers in the transmission structure, the optical amplifiers may be classified into aggregated optical amplifiers and uplink/downlink optical amplifiers. The aggregated optical amplifiers are optical amplifiers through which all subsequent optical fiber transmissions to a certain station pass. The uplink/downlink optical amplifiers are amplifiers through which uplink/downlink services at a certain station pass. The signal-to-noise ratio is the ratio of a service signal to noise, where the noise is generated by the optical amplifiers. The signal-to-noise ratio of an aggregated optical amplifier is the ratio of a service signal to the noise generated by the aggregated optical amplifier.

At S120, a signal-to-noise ratio of an aggregated optical amplifier corresponding to a temporary route is determined according to a signal-to-noise ratio of an aggregated optical amplifier corresponding to a sub-route.

The temporary route is determined according to the sub-route. In a temporary route, a first station of the service route as serves a starting station, and at least one sub-route is contained. With reference to FIG. 2, the temporary routes maybe 001-(002)-003, 001-(002)-003-004, 001-(002)-003-004-005, 001-(002)-003-004-005-006 and 001-(002)-003-004-005-006-(007)-008. The signal-to-noise ratio of an aggregated optical amplifier corresponding to the temporary route can be determined according to the signal-to-noise ratio of the aggregated optical amplifier corresponding to the sub-route.

In an embodiment, if a temporary route contains only one sub-route, the signal-to-noise ratio of the aggregated optical amplifier corresponding to the temporary route is the same as the signal-to-noise ratio of the aggregated optical amplifier corresponding to the sub-route. For example, the signal-to-noise ratio of the aggregated optical amplifier corresponding to the temporary route 001-(002)-003 is the same as the signal-to-noise ratio of the aggregated optical amplifier corresponding to the sub-route 001-(002)-003. If a temporary route contains at least two sub-routes, the signal-to-noise ratio of the aggregated optical amplifier corresponding to a current temporary route can be determined on the basis of the signal-to-noise ratio of the aggregated optical amplifier corresponding to a previous temporary route and in combination with a newly introduced sub-route. For example, the signal-to-noise ratio of the aggregated optical amplifier corresponding to the temporary route 001-(002)-003-004 can be determined on the basis of the temporary route 001-(002)-003 and in combination with the sub-route 003-004. The specific determination process can be set according to practical requirements.

At S130, a range for a configuration relay is determined according to the signal-to-noise ratio of the aggregated optical amplifier corresponding to the temporary route, so as to determine a target service station for relay configuration within the range according to the signal-to-noise ratio of a hybrid-path optical amplifier corresponding to the temporary route.

In an embodiment, in order to improve the accuracy of relay configuration and decrease the number of relays, the range of the relay configuration is determined according to the signal-to-noise ratio of the aggregated optical amplifier corresponding to the temporary route, and a target service station is then determined within the range according to the signal-to-noise ratio of the hybrid-path optical amplifier. The hybrid-path optical amplifier includes an aggregated optical amplifier and an uplink/downlink optical amplifier. The signal-to-noise ratio of the hybrid-path optical amplifier is the ratio of a service signal to the noise generated by the aggregated optical amplifier and the uplink/downlink optical amplifier. Apparently, it is also possible that the range for the relay configuration is directly determined according to the signal-to-noise ratio of the hybrid-path optical amplifier, and the target service station is then determined within the range according to the signal-to-noise ratio of the hybrid-path optical amplifier. It is also possible that the target service station is determined according to either the signal-to-noise ratio of the uplink/downlink optical amplifier or the signal-to-noise ratio of the aggregated optical amplifier.

In some embodiments, the signal-to-noise ratio of the aggregated amplifier of each temporary route can be determined in a certain order. If the signal-to-noise ratio of the aggregated amplifier of a temporary route is less than a signal-to-noise ratio limit value corresponding to the service transmission, the service stations contained in this temporary route should serve as the range for the relay configuration. Then, the last sub-route in the temporary route is removed and a new temporary route is generated. And if the signal-to-noise ratio of the hybrid-path optical amplifier of the new temporary route is greater than the signal-to-noise limit value, the ending station of the new temporary route is determined as a target service station. The new temporary route contains one less sub-route than the temporary route.

For example, with reference to FIG. 2, if it is determined that the signal-to-noise ratio of the aggregated optical amplifier of each of the temporary routes 001-(002)-003, 001-(002)-003-004, 001-(002)-003-004-005 and 01-(002)-003-004-005-006 is greater than the signal-to-noise ratio limit but the signal-to-noise ratio of the aggregated optical amplifier of the temporary route 001-(002)-003-004-005-006-(007)-008 is less than the signal-to-noise ratio limit value, the range for the relay configuration is determined as the service stations 003, 004, 005, 006 and 008. And if the signal-to-noise ratio of the hybrid-path optical amplifier corresponding to the new temporary route 001-(002)-003-004-005-006 is greater than the signal-to-noise ratio limit value, the service station 006 is determined as the target service station. The signal-to-noise limit value can be set according to practical requirements.

In the relay configuration method as set forth in this embodiment of the present application, a signal-to-noise ratio of an aggregated optical amplifier corresponding to a sub-route in the network topological graph is determined according to an acquired network topological graph; a signal-to-noise ratio of an aggregated optical amplifier corresponding to a temporary route is determined according to the signal-to-noise ratio of the aggregated optical amplifier corresponding to the sub-route; and a range for a relay configuration is determined according to a signal-to-noise ratio of an aggregated optical amplifier corresponding to the temporary route, such that a target service station is determined for the relay configuration within the range according to the signal-to-noise ratio of the aggregated optical amplifier corresponding to the temporary route. As compared to some technical schemes, in this embodiment, the range for the relay configuration is determined by means of the signal-to-noise ratio of the aggregated optical amplifier, and the target service station is further determined within the range according to the signal-to-noise ratio of the hybrid-path optical amplifier, thereby decreasing the number of relays and reducing the network cost while ensuring the proper transmission of services.

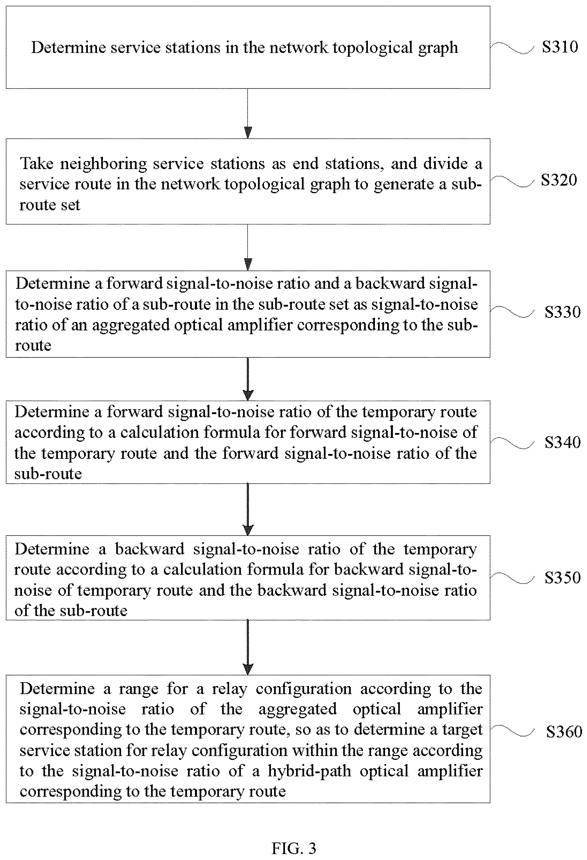

FIG. 3 shows a flowchart of another relay configuration method according to an embodiment of the present application, which may include the following operations of S310 to S360.

At S310, service stations in the network topological graph are determined.

With reference to FIG. 2, the service stations are stations 001, 003, 004, 005, 006, 008 and 009, and relays can be configured at any one of these service stations.

At S320, neighboring service stations are taken as end stations, and a service route in the network topological graph is divided to generate a sub-route set.

In an embodiment, by taking neighboring service stations as end stations, the service route 001-(002)-003-004-005-006-(007)-008-009 is divided to generate sub-routes of 001-(002)-003, 003-004, 004-005, 005-006, 006-(007)-008 and 008-009, and these sub-routes form a sub-route set of [001-(002)-003, 003-004, 004-005, 005-006, 006-(007)-008, 008-009]. It is to be noted that, in this embodiment, the neighboring stations include, direct neighboring service stations such as service stations 003 and 004, and indirect neighboring service stations such as, services stations 001 and 003.

At S330, a forward signal-to-noise ratio and a backward signal-to-noise ratio of a sub-route in the sub-route set are determined as the signal-to-noise ratio of an aggregated optical amplifier corresponding to the sub-route.

The aggregated optical amplifier signal-to-noise ratio may be a forward signal-to-noise ratio and a backward signal-to-noise ratio in terms of the order of the service route. For example, "forward" refers to the order from a starting station to an ending station of the service route, and "backward" refers to the order from the ending station to the starting station. The process of determining the forward signal-to-noise ratio and the backward signal-to-noise ratio of the sub-route may refer to the related technology and will not be repeated here.

At S340, a forward signal-to-noise ratio of the temporary route is determined according to a calculation formula for the forward signal-to-noise of the temporary route and the forward signal-to-noise ratio of the sub-route.

The determining of the temporary route is performed with the following process.

A first station of the service route in the network topological graph is determined as a starting station of the temporary route.

The sub-routes are successively added into a temporary route set of the temporary route in an order in the network topological graph.

And a temporary route is generated according to the temporary route set.

With reference to FIG. 2, the first station of the service route is the service station 001, and the service station serves as the starting station of the temporary route. Starting from the first station, subsequent sub-routes are successively added into the temporary route set of the temporary route to generate temporary routes. The first temporary route is 001-(002)-003, and the corresponding temporary route set is [001-(002)-003]. On this basis, the sub-route 003-004 is successively added into the temporary route set to generate [001-(002)-003, 003-004], so that a second temporary route 001-(002)-003-004 is generated. The process of determining other temporary routes is similar. After the temporary routes are determined, the forward and backward signal-to-noise ratios of each temporary route are determined according to the forward and backward signal-to-noise ratios of the sub-route and in combination with the calculation formulas for the forward and backward signal-to-noise ratios of the temporary route .

In an embodiment, the calculation formula for the forward signal-to-noise ratio of a temporary route is:

$$\text{OSNR}_A = \alpha - \beta \lg M - \beta \lg(10^{\frac{\alpha - \beta \lg M - \text{OSNR}_{Ai}}{10}} + 10^{\frac{\alpha - \beta \lg M - \text{OSNR}_{A-1}}{10}}),$$

where $\text{OSNR}_A$ is the forward signal-to-noise ratio of the current temporary route, $\alpha$ and $\beta$ are constants, M is the wavelength of the service route in the network topological graph, $\text{OSNR}_{Ai}$ is the forward signal-to-noise ratio of the sub-route, and $\text{OSNR}_{A-1}$ is the forward signal-to-noise ratio of the previous temporary route. For convenience of description, in an embodiment, the forward signal-to-noise ratio of the temporary route is denoted as OSNRA, the backward signal-to-noise ratio of the temporary route is denoted as OSNRB, the forward signal-to-noise ratio of the sub-route is denoted as OSNRAi, the backward signal-to-noise ratio of the sub-route is denoted as OSNRBi, and i denotes an $i^{th}$ sub-route. With reference to FIG. 2, OSNRA2 denotes the forward signal-to-noise ratio of the second sub-route 003-004. In an example, in the above formula, $\alpha$=58 and $\beta$=10.

It can be seen from the above formula that the forward signal-to-noise ratio of the current temporary route can be obtained on the basis of the forward signal-to-noise ratio of the previous temporary route and in combination with the forward signal-to-noise ratio of the newly added sub-route, so that the calculation efficiency is improved.

At S350, a backward signal-to-noise ratio of the temporary route is determined according to a calculation formula for the backward signal-to-noise of temporary route and the backward signal-to-noise ratio of the sub-route.

In an embodiment, the calculation formula for the backward signal-to-noise ratio of the temporary route is:

$$OSNR_{B} = \alpha - \beta \lg M - \beta \lg(10^{\frac{\alpha - \beta \lg M - OSNR_{Bi}}{10}} + 10^{\frac{\alpha - \beta \lg M - OSNR_{B-1}}{10}}),$$

where $OSNR_{B}$ is the backward signal-to-noise ratio of the current temporary route, $OSNR_{Bi}$ is the backward signal-to-noise ratio of the sub-route, $OSNR_{B-1}$ is the backward signal-to-noise ratio of the previous temporary route. Similar to the process of determining the forward signal-to-noise ratio, the backward signal-to-noise ratio of the current temporary route can be fast determined by the above formula, so that the calculation efficiency is improved. In an example, in the above formula, $\alpha$=58 and $\beta$=10.

At S360, a range for a relay configuration is determined according to the signal-to-noise ratio of the aggregated optical amplifier corresponding to the temporary route, so as to determine a target service station for relay configuration within the range according to the signal-to-noise ratio of a hybrid-path optical amplifier corresponding to the temporary route.

Based on the above embodiment, in this embodiment of the present application, the service route is divided to generate at least one sub-route, and the forward signal-to-noise ratio and the backward signal-to-noise ratio of the temporary route are obtained according to the forward signal-to-noise ratio and the backward signal-to-noise ratio of the sub-route and in combination with the calculation formulas for forward and backward signal-to-noise ratios of the temporary route, so that the network cost is reduced and the calculation efficiency is also ensured.

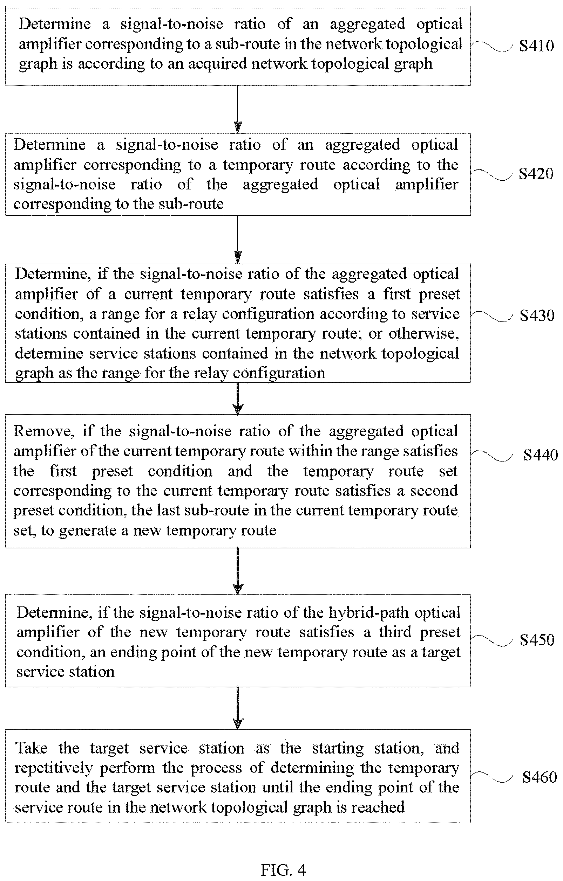

FIG. 4 shows a flowchart of another relay configuration method according to an embodiment of the present application. The method may include the following operations of S410 to S460.

At S410, a signal-to-noise ratio of an aggregated optical amplifier corresponding to a sub-route in the network topological graph is determined according to an acquired network topological graph.

At S420, a signal-to-noise ratio of an aggregated optical amplifier corresponding to a temporary route is determined according to the signal-to-noise ratio of the aggregated optical amplifier corresponding to the sub-route.

At S430, if the signal-to-noise ratio of the aggregated optical amplifier of a current temporary route satisfies a first preset condition, a range for a relay configuration is determined according to service stations contained in the current temporary route; or otherwise, service stations contained in the network topological graph determined as the range for the relay configuration.

The first preset condition is that the forward signal-to-noise ratio of the current temporary route is less than a forward signal-to-noise ratio threshold and/or the backward signal-to-noise ratio of the current temporary route is less than a backward signal-to-noise ratio threshold. Reference can be made to the above embodiment for the process of determining the forward signal-to-noise ratio and the backward signal-to-noise ratio of the temporary route, and which will not be repeated here. In an embodiment, both the forward signal-to-noise ratio threshold and the backward signal-to-noise ratio are 24 dB. The forward signal-to-noise ratio and the backward signal-to-noise ratio of each temporary route are determined successively in an order of the service route. If the forward signal-to-noise ratio of a certain temporary route is less than the forward signal-to-noise ratio threshold, or if the backward signal-to-noise ratio is less than the backward signal-to-noise ratio threshold, or if the forward signal-to-noise ratio is less than the forward signal-to-noise ratio threshold and the backward signal-to-noise ratio is less than the backward signal-to-noise ratio threshold, an ending station of this temporary route is determined as the range for the relay configuration. If the forward signal-to-noise ratio and the backward signal-to-noise ratio of the temporary route contained in the network topological graph are greater than the corresponding forward signal-to-noise ratio threshold and backward signal-to-noise ratio threshold, an ending station of this service route is determined as the range for the relay configuration.

At S440, if the signal-to-noise ratio of the aggregated optical amplifier of the current temporary route within the range satisfies the first preset condition and the temporary route set corresponding to the current temporary route satisfies a second preset condition, the last sub-route in the current temporary route set is removed and a new temporary route is generated.

The first preset condition may be that the forward signal-to-noise ratio of the current temporary route is less than the forward signal-to-noise ratio threshold or the backward signal-to-noise ratio of the current temporary route is less than the backward signal-to-noise ratio threshold. The second preset condition is that the current temporary route set has two or more sub-routes. In an embodiment, the forward signal-to-noise ratio threshold is the same as the backward signal-to-noise ratio threshold, and both are 24 dB. It is to be noted that the current temporary route at S440 is the temporary route for determining the range. For example, if the forward signal-to-noise ratio of the temporary route 001-(002)-003-004-005-006 is less than the forward signal-to-noise ratio threshold, this temporary route is denoted as the current temporary route. If the signal-to-noise ratio of the aggregated optical amplifier of the current temporary route satisfies the first preset condition and the temporary route set corresponding to the current temporary route satisfies the second preset condition, the last sub-route in the current temporary route is removed and a new temporary route is generated.

For example, for the temporary route 001-(002)-003-004-005-006, it is calculated that the forward signal-to-noise ratio is 22.02 dB and the backward signal-to-noise ratio is 22.02 dB. The forward signal-to-noise ratio and the backward signal-to-noise ratio of the temporary route are thus less than the corresponding thresholds, and the temporary route contains four sub-routes. Therefore, the last sub-route 005-006 is removed and a new temporary route 001-(002)-003-004-005 is generated.

At S450, if the signal-to-noise ratio of the hybrid-path optical amplifier of the new temporary route satisfies a third preset condition, an ending station of the new temporary route is determined as a target service station.

The third preset condition may be that the calculated forward signal-to-noise ratio of the new temporary route of the noise introduced by the aggregated optical amplifier and the uplink/downlink optical amplifier is greater than the forward signal-to-noise ratio threshold, and the backward signal-to-noise ratio of the new temporary route is greater than the backward signal-to-noise ratio threshold. For convenience of description, in an embodiment, in a case where other OSNR costs in forward and backward directions are taken into consideration, the forward signal-to-noise ratio and the backward signal-to-noise ratio are denoted as OSNRA' and OSNRB' according to the directions, respectively. The other OSNR costs include system margin, power fluctuation cost, erbium-doped optical fiber amplifier (EDFA) gain unevenness, nonlinear cost, filter cost, or the like. In an example, for the new temporary route 001-(002)-003-004-005, it is calculated that the values of the OSNRA' and OSNRB' are both 24.05 dB, which are greater than the corresponding thresholds. If other transmission constraints for the new temporary route have been satisfied, the service station 005 is determined as the target service station. The other transmission constraints include, but are not limited to, the constraints for polarization mode dispersion (PMD), residual dispersion, or the like.

At S460, the target service station is taken as the starting station, the process of determining the temporary route and the target service station is repetitively performed until the ending station of the service route in the network topological graph is reached.

After the target service station is determined, the target service station is determined as the starting station, sub-routes are successively determined backward along the route, and temporary routes are determined according to the sub-routes until reaching the ending station of the service route in the network topological graph. The determination process is similar to the determination process in which the first station of the service route is determined as the starting route. For example, the target service station is station 005, and sub-routes of 005-006, 006-(007)-008 and 008-009 and temporary routes 005-006, 005-006-(007)-008 and 005-006-(007)-008-009 are generated backward along the route from this station as the starting station. Further, a determination is made on whether other target service stations present. The determination process is similar to the process of determining the target service station 005.

In this embodiment of the present application, during the delay configuration, the range for the relay configuration is determined by means of the signal-to-noise ratio of the aggregated optical amplifier, and the target service station is then determined within the range according to the signal-to-noise ratio of the hybrid-path optical amplifier, thereby decreasing the number of relays and reducing the network cost while ensuring the proper transmission of services.

The process of relay configuration will be described below by way of an example with details.

It is assumed that both the forward signal-to-noise ratio threshold and the backward signal-to-noise ratio threshold are 24 dB. With reference to FIG. 2, service station 001 and service station 009 are taken as the starting point and ending station of the service route in the forward direction, respectively. The service route is divided to generate a sub-route set [001-(002)-003, 003-004, 004-005, 005-006, 006-(007)-008, 008-009]. In a case where only the noise introduced by the aggregated optical amplifier is taken into consideration, the signal-to-noise ratios (i.e., OSNRAi and OSNRBi) of each sub-route in both forward and backward directions are calculated. The OSNRAi/OSNRBi of each sub-route in the sub-route set are [30.18/30.18 dB, 30.98/30.98 dB, 30.98/30.16 dB, 30.16/30.98 dB, 30.18/30.18 dB, 30.98/30.98 dB], respectively.

The first station 001 of the service route is taken as a starting station of a temporary route, backward along the route, the first sub-route 001-(002)-003 is added into the temporary route set [001-(002)-003] to generate a first temporary route 001-(002)-003. This temporary route set contains only one sub-route. Thus, the forward and backward signal-to-noise ratios OSNRA/OSNRB of this temporary route can be 30.18 dB/30.18 dB, respectively. On this basis, the second sub-route 003-004 is successively added into the temporary route set [001-(002)-003, 003-004] to generate a second temporary route 001-(002)-003-004. This temporary route contains two sub-routes. Thus, according to the above formulae (1) and (2), the forward and backward signal-to-noise ratios OSNRA/OSNRB of this temporary route are 27.55 dB/27.55 dB, respectively. And so forth, a third temporary route 001-(002)-003-004-005 is then generated, and the forward and backward signal-to-noise ratios OSNRA/OSNRB of this temporary route are 25.92 dB/25.65 dB, respectively. A fourth temporary route 001-(002)-003-004-005-006 is then generated, and the forward and backward signal-to-noise ratios OSNRA/OSNRB of this temporary route are 24.54 dB/24.53 dB, respectively. A fifth temporary route 001-(002)-003-004-005-006-(007)-008 is then generated, and the forward and backward signal-to-noise ratios OSNRA/OSNRB of this temporary route are 23.49 dB/23.49 dB, respectively.

Since the forward and backward signal-to-noise ratios of the fifth temporary route 001-(002)-003-004-005-006-(007)-008 are less than 24 dB and this temporary route contains five sub-routes, the last sub-route 006-(007)-008 is removed and a new temporary route 001-(002)-003-004-005-006 is generated. The OSNRA'/OSNRB' of this temporary route are 22.02 dB/22.02 dB, respectively, which are less than 24 dB. The last sub-route 005-006 is then removed and a new temporary route 001-(002)-003-004-005 is generated. The OSNRA'/OSNRB' of this new temporary route are 24.05 dB/24.05 dB, respectively, which are greater than 24 dB. If other transmission constrains for this temporary route are satisfied, the service station 005 is determined as a target service station for relay configuration.

Service station 005 is taken as a starting station, backward along the route, new temporary routes 005-006, 005-006-(007)-008 and 005-006-(007)-008-009 are generated, respectively, and the corresponding forward and backward signal-to-noise ratios OSNRA/OSNRB are 30.16 dB/30.98 dB, 27.16 dB/27.55 dB and 25.65 dB/25.92 dB, respectively, which are all greater than 24 dB. In the case that the temporary route 005-006-(007)-008-009 has reached the ending station 009 of the original service route and the OSNRA'/OSNRB' of the temporary route 005-006-(007)-008-009 are 24.62 dB/24.05 dB respectively, which are greater than 24 dB, the search process for the relay configuration ends. To sum up, it is determined that the target service station for relay configuration in the network topological graph is station 005.

In a conventional method, the target service station is determined according to the signal-to-noise ratio of the hybrid-path optical amplifier. For example, it is obtained that the forward and backward signal-to-noise ratios of the temporary route 001-(002)-003 are 25.42 dB/26.5 dB, respectively, and the forward and backward signal-to-noise ratios of the temporary route 001-(002)-003-004 are 23.65 dB/23.65 dB, respectively. Since 23.65<24, a relay is configured at the service station 003, and configuration is continued by taking station 003 as a starting station. The forward and backward signal-to-noise ratios of the temporary routes 003-004, 003-004-005 and 003-004-005-006 are 25.66 dB/25.66 dB, 26.51 dB/26.2 dB and 23.49 dB/23.49 dB, respectively. Since 23.49<24, a relay is configured at station 005, and relay configuration is continued by taking station 005 as a starting station. The forward and backward signal-to-noise ratios of the temporary routes 005-006, 005-006-(007)-008 and 005-006-(007)-008-009 are 26.5 dB/26.83 dB, 24.95 dB/25.18 dB and 24.61 dB/24.05 dB, respectively, which are all greater than 24 dB, so that relay configuration ends. Therefore, the stations to be configured with relays are stations 003 and 005. It can be seen that, as compared with the conventional method, the number of relays to be configured in this embodiment is decreased, and the network cost is reduced.

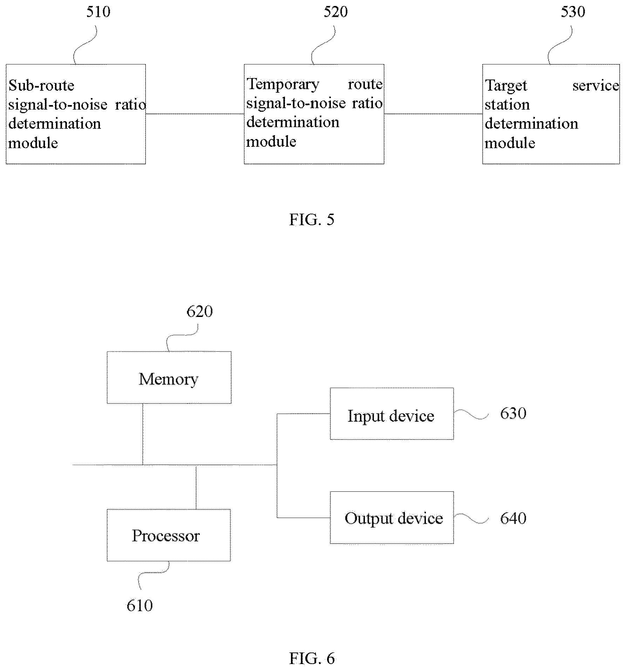

FIG. 5 shows a schematic diagram of a relay configuration device according to an embodiment of the present application. The device may execute the relay configuration method described in the above embodiments. In an embodiment, the device includes, a sub-route signal-to-ratio determination module 510, a temporary route signal-to-noise ratio determination module 520, and a target service station determination module 530.

The sub-route signal-to-ratio determination module 510 is configured to determine, according to an acquired network topological graph, a signal-to-noise ratio of an aggregated optical amplifier corresponding to a sub-route in the network topological graph.

The temporary route signal-to-noise ratio determination module 520 is configured to determine, according to the signal-to-noise ratio of the aggregated optical amplifier corresponding to the sub-route, a signal-to-noise ratio of an aggregated optical amplifier corresponding to a temporary route, the temporary route is determined according to the sub-route.

The target service station determination module 530 is configured to determine a range for a relay configuration according to the signal-to-noise ratio of the aggregated optical amplifier corresponding to the temporary route, so as to determine a target service station for the relay configuration in the configuration range according to a signal-to-noise ratio of a hybrid-path optical amplifier corresponding to the temporary route.

This embodiment of the present application provides a relay configuration device. A signal-to-noise ratio of an aggregated optical amplifier corresponding to a sub-route in the network topological graph is determined according to an acquired network topological graph. A signal-to-noise ratio of an aggregated optical amplifier corresponding to a temporary route is determined according to the signal-to-noise ratio of the aggregated optical amplifier corresponding to the sub-route. And, a range for a relay configuration is determined according to the signal-to-noise ratio of the aggregated optical amplifier corresponding to the temporary route, so that a target service station for the relay configuration within the configuration range is determined according to a signal-to-noise ratio of a hybrid-path optical amplifier corresponding to the temporary route. Compared with the related technology, in the embodiments of the present application, the range for relay configuration is determined by means of the signal-to-noise ratio of the aggregated optical amplifier, and the target service station is further determined within the range for configuration according to the signal-to-noise ratio of the hybrid-path optical amplifier, thereby decreasing the number of relays and reducing the network cost while ensuring the proper transmission of services.

Based on the above embodiments, the sub-route signal-to-noise ratio determination module 510 is further configured to:

determine service stations in the network topological graph;
take neighboring service stations as end stations, divide a service route in the network topological graph to obtain a sub-route set; and

determine a forward signal-to-noise ratio and a backward signal-to-noise ratio of a sub-route in the sub-route set as the signal-to-noise ratio of the aggregated optical amplifier corresponding to the sub-route.

Based on the above embodiments, determining the temporary route according to the sub-route includes:

determining a first station of the service route in the network topological graph as a starting station of the temporary route;
successively adding the sub-routes into a temporary route set of the temporary route in an order in the network topological graph; and
generating a temporary route according to the temporary route set.

Based on the above embodiments, the temporary route signal-to-noise ratio determination module 520 is further configured to:

determine a forward signal-to-noise ratio of the temporary route according to a calculation formula for the forward signal-to-noise of the temporary route and the forward signal-to-noise ratio of the sub-route; and
determine a backward signal-to-noise ratio of the temporary route according to a calculation formula for the backward signal-to-noise of the temporary route and the backward signal-to-noise ratio of the sub-route.

Based on the above embodiments, the calculation formula of the signal-to-noise ratio of the temporary route forward is:

$$\mathrm{OSNR_A} = \alpha - \beta \lg \mathrm{M} \text{-} \beta \lg(10^{\frac{\alpha-\beta \lg \mathrm{M}-\mathrm{OSNR_{Ai}}}{10}} + 10^{\frac{\alpha-\beta \lg \mathrm{M}-\mathrm{OSNR_{A\text{-}1}}}{10}}),$$

where $\mathrm{OSNR_A}$ is the forward signal-to-noise ratio of a current temporary route, $\alpha$ and $\beta$ are constants, M is the wavelength of the service route in the network topological graph, $\mathrm{OSNR_{Ai}}$ is the forward signal-to-noise ratio of the sub-route, and $\mathrm{OSNR_{A\text{-}1}}$ is the forward signal-to-noise ratio of a previous temporary route.

The calculation formula for the backward signal-to-noise ratio of the temporary route is:

$$\mathrm{OSNR_B} = \alpha - \beta \lg \mathrm{M} \text{-} \beta \lg(10^{\frac{\alpha-\beta \lg \mathrm{M}-\mathrm{OSNR_{Bi}}}{10}} + 10^{\frac{\alpha-\beta \lg \mathrm{M}-\mathrm{OSNR_{B\text{-}1}}}{10}}),$$

where $\mathrm{OSNR_B}$ is the backward signal-to-noise ratio of the current temporary route, $\mathrm{OSNR_{Bi}}$ is the backward signal-to-noise ratio of the sub-route, $\mathrm{OSNR_{B\text{-}1}}$ is the backward signal-to-noise ratio of the previous temporary route.

Based on the above embodiments, the target service station determination module 530 is further configured to:

determine, in case that the signal-to-noise ratio of the aggregated optical amplifier of the current temporary route satisfies a first preset condition, the range for the relay configuration according to service stations contained in the current temporary route; or otherwise, determine the service stations contained in the network topological graph as the range for the relay configuration;
where the first preset condition is that the forward signal-to-noise ratio of the current temporary route is less than a forward signal-to-noise ratio threshold and/or the backward signal-to-noise ratio of the current temporary route is less than a backward signal-to-noise ratio threshold.

Based on the above embodiments, the determining of a target service station for relay configuration within the configuration range according to the signal-to-noise ratio of the hybrid-path optical amplifier corresponding to the temporary route includes:

if the signal-to-noise ratio of the aggregated optical amplifier of the current temporary route within the configuration range satisfies the first preset condition and the temporary route set corresponding to the current temporary route satisfies a second preset condition, removing the last sub-route in the current temporary route set to generate a new temporary route;
if the signal-to-noise ratio of the hybrid-path optical amplifier of the new temporary route satisfies a third preset condition, determining an ending station of the new temporary route as a target service station; and
taking the target service station as a starting station, and repetitively performing the process of determining the temporary route and the target service station until the ending station of the service route in the network topological graph is reached.

The relay configuration device according to this embodiment of the present application can perform the relay configuration method described in the above embodiments, and has corresponding functional modules for executing the method and beneficial effects.

FIG. 6 shows a schematic diagram of an apparatus according to an embodiment of the present application.

With reference to FIG. 6, the apparatus includes, a processor 610, a memory 620, an input device 630, and an output device 640. The apparatus may have one or more processors 610, but FIG. 6 is illustrated by taking one processor 610 as an example. The processor 610, the memory 620, the input device 630 and the output device 640 in the apparatus may be connected via a bus, or the like, and FIG. 6 is illustrated by taking a bus for connection as an example.

As a computer-readable storage medium, the memory 620 may be configured to store software programs, computer-executable programs and modules, such as program instructions/modules corresponding to the relay configuration method described in the embodiments of the present application. The software programs, instructions and modules stored in the memory 620, when executed by the processor 610, cause the processor 610 to perform various functional applications and data processing of the apparatus, so as to carry out the relay configuration method described in the above embodiments.

The memory 620 may mainly include a program storage region and a data storage region. The program storage region may store application programs required by the operating system and at least one function, and the data storage region may store data created according to the use of the terminal device, etc. In addition, the memory 620 may include high-speed random-access memories, or may include non-volatile memories, for example, at least one magnetic disk memory device, a flash memory device or other non-volatile solid-state memory devices. In some instances, the memory 620 may include memories remotely arranged relative to the processor 610, and these remote memories may be connected to the device via a network. Examples of the network include, but are not limited to, Internet, Intranet, local area networks, mobile communication networks, and combinations thereof.

The input device 630 may be configured to receive input digit or character information and generate a key signal input related to user settings and functional control of the apparatus. The output device 640 may include display devices such as a display screen, and audio devices such as a loudspeaker or a buzzer.

The apparatus according to this embodiment of the present application belongs to the same concept as the relay configuration method described in the above embodiments. The technical details that are not described in detail in this embodiment, and reference may be made to the above embodiments for details. And this embodiment achieves the same beneficial effects as those by performing the relay configuration method.

An embodiment of the present invention further provides a storage medium having computer programs stored thereon which, when executed by a processor, cause the processor to carry out the relay configuration method described in the above embodiments of the present application.

It is apparent that, in the storage medium containing computer-executable instructions according to this embodiment of the present application, the computer-executable instructions may cause the processor to perform not only operations in the relay configuration method described above but also related operations to the relay configuration method described in any one of the embodiments of the present application, and the storage medium has the corresponding functions and beneficial effects.

From the foregoing description of the implementations, it should be clearly understood by a person having ordinary skills in the art that the present application may be implemented by software and necessary general-purpose hardware. It is apparent that, the present application may also be implemented by hardware, although in many cases, the former is preferred. Based on this understanding, the technical schemes of the present application may be substantially embodied in the form of a software product, or a part of the present application that contributes to the existing technology may be embodied in the form of a software product. The computer software product may be stored in a computer-readable storage medium, for example, floppy disks, read-only memories (ROMs), random access memories (RAMs), flash memories (FLASH), hard disks, optical disks or the like of computers, and includes a plurality of instructions configured to cause a computer device (which may be a personal computer, a server, a network device, etc.) to execute the relay configuration method described in the above embodiments of the present application.

It is to be noted that the foregoing description merely shows some embodiments and the technical principles of the present application. It should be understood by a person having ordinary skills in the art that the present application is not limited to the specific embodiments described herein. For a person having ordinary skills in the art, various obvious alterations, readjustments and replacements can be made without departing from the protection scope of the present application. Therefore, although the present application has been described in detail by the above embodiments, the present application is not limited thereto, and more other equivalent embodiments may be included without departing from the concept of the present application. The scope of the present application is defined by the appended claims.

**Claims**

1. A relay configuration method, comprising,

   determining, according to an acquired network topological graph, a signal-to-noise ratio of an aggregated optical amplifier corresponding to a sub-route in the network topological graph;
   determining, according to the signal-to-noise ratio of the aggregated optical amplifier corresponding to the sub-route, a signal-to-noise ratio of an aggregated optical amplifier corresponding to a temporary route, the temporary route being determined according to the sub-route; and
   determining a range for a relay configuration according to the signal-to-noise ratio of the aggregated optical amplifier corresponding to the temporary route, so as to determine a target service station for the relay configuration within the range according to a signal-to-noise ratio of a hybrid-path optical amplifier corresponding to the temporary route.

2. The method of claim 1, wherein determining, according to the acquired network topological graph, the signal-to-noise ratio of the aggregated optical amplifier corresponding to the sub-route in the network topological graph, comprises,

   determining a plurality of service stations in the network topological graph;
   taking neighboring service stations as end stations, and dividing a service route in the network topological graph to generate a sub-route set; and
   determining a forward signal-to-noise ratio and a backward signal-to-noise ratio of a sub-route in the sub-route set as the signal-to-noise ratio of the aggregated optical amplifier corresponding to the sub-route.

3. The method of claim 1, wherein determination of the temporary route according to the sub-route comprises,

   determining a first station of a service route in the network topological graph as a starting station of the temporary route;
   successively adding each sub-route into a temporary route set of the temporary route in an order in the network topological graph; and
   generating a temporary route according to the temporary route set.

4. The method of claim 1, wherein determining, according to the signal-to-noise ratio of the aggregated optical amplifier corresponding to the sub-route, the signal-to-noise ratio of the aggregated optical amplifier corresponding to the temporary route, comprises,

   determining, a forward signal-to-noise ratio of the temporary route, according to a calculation formula for the forward signal-to-noise of the temporary route and a forward signal-to-noise ratio of the sub-route; and
   determining, a backward signal-to-noise ratio of the temporary route, according to a calculation formula for the backward signal-to-noise of the temporary route and a backward signal-to-noise ratio of the sub-route.

5. The method of claim 4, wherein the calculation formula for the forward signal-to-noise ratio of the temporary route is:

$$\mathrm{OSNR_A} = \alpha - \beta\lg\mathrm{M} - \beta\lg(10^{\frac{\alpha-\beta\lg\mathrm{M}-\mathrm{OSNR_{Ai}}}{10}} + 10^{\frac{\alpha-\beta\lg\mathrm{M}-\mathrm{OSNR_{A\text{-}1}}}{10}}),$$

   where $\mathrm{OSNR_A}$ is the forward signal-to-noise ratio of a current temporary route, $\alpha$ and $\beta$ are constants, M is the wavelength of a service route in the network topological graph, $\mathrm{OSNR_{Ai}}$ is the forward signal-to-noise ratio of the sub-route, and $\mathrm{OSNR_{A\text{-}1}}$ is the forward signal-to-noise ratio of a previous temporary route; and
   the calculation formula for the backward signal-to-noise ratio of the temporary route is:

$$\mathrm{OSNR_B} = \alpha - \beta\lg\mathrm{M} - \beta\lg(10^{\frac{\alpha-\beta\lg\mathrm{M}-\mathrm{OSNR_{Bi}}}{10}} + 10^{\frac{\alpha-\beta\lg\mathrm{M}-\mathrm{OSNR_{B\text{-}1}}}{10}}),$$

   where $\mathrm{OSNR_B}$ is the backward signal-to-noise ratio of the current temporary route, $\mathrm{OSNR_{Bi}}$ is the backward signal-to-noise ratio of the sub-route, and $\mathrm{OSNR_{B\text{-}1}}$ is the backward signal-to-noise ratio of the previous temporary route.

6. The method of claim 1, wherein determination of the range for the relay configuration according to the signal-to-noise ratio of the aggregated optical amplifier corresponding to the temporary route, comprises,

determining, in response to the signal-to-noise ratio of the aggregated optical amplifier of a current temporary route satisfying a first preset condition, the range for the relay configuration according to service stations contained in the current temporary route; or otherwise, determining service stations contained in the network topological graph as the range for the relay configuration; and
wherein the first preset condition is that the forward signal-to-noise ratio of the current temporary route is less than a forward signal-to-noise ratio threshold and/or the backward signal-to-noise ratio of the current temporary route is less than a backward signal-to-noise ratio threshold.

7. The method of claim 1, wherein determination of the target service station for relay configuration within the range according to the signal-to-noise ratio of the hybrid-path optical amplifier corresponding to the temporary route, comprises,

removing, in response to the signal-to-noise ratio of the aggregated optical amplifier of a current temporary route within the range satisfying a first preset condition and the temporary route set corresponding to the current temporary route satisfying a second preset condition, a last sub-route from the current temporary route set to generate a new temporary route;
determining, in response to a signal-to-noise ratio of a hybrid-path optical amplifier of the new temporary route satisfying a third preset condition, an ending station of the new temporary route as the target service station; and
taking the target service station as a starting station, and repetitively performing determination of the temporary route and the target service station until an ending station of the service route in the network topological graph is reached.

8. A relay configuration device, comprising,

a sub-route signal-to-ratio determination module configured to determine, according to an acquired network topological graph, a signal-to-noise ratio of an aggregated optical amplifier corresponding to a sub-route in the network topological graph;
a temporary route signal-to-noise ratio determination module configured to determine, according to the signal-to-noise ratio of the aggregated optical amplifier corresponding to the sub-route, a signal-to-noise ratio of an aggregated optical amplifier corresponding to a temporary route determined according to the sub-route; and
a target service station determination module configured to determine, a range for a relay configuration according to the signal-to-noise ratio of the aggregated optical amplifier corresponding to the temporary route, so as to determine a target service station for the relay configuration within the range according to a signal-to-noise ratio of a hybrid-path optical amplifier corresponding to the temporary route.

9. An apparatus, comprising at least one processor, and a memory configured to store at least one program which, when executed by the processor, causes the processor to carry out the relay configuration method of any one of claims 1 to 7.

10. A storage medium having at least one computer program stored thereon which, when executed by a processor, causes the processor to carry out the relay configuration method of any one of claims 1 to 7.

Determine a signal-to-noise ratio of an aggregated optical amplifier corresponding to a sub-route in the network topological graph according to an acquired network topological graph    S110

Determine a signal-to-noise ratio of an aggregated optical amplifier corresponding to a temporary route according to a signal-to-noise ratio of an aggregated optical amplifier corresponding to a sub-route    S120

Determine a range for a configuration relay according to the signal-to-noise ratio of the aggregated optical amplifier corresponding to the temporary route, so as to determine a target service station for relay configuration within the range according to signal-to-noise ratio of a hybrid-path optical amplifier corresponding to the temporary route    S130

FIG. 1

001      002      003      004      005      006      007      008      009

FIG. 2

Determine service stations in the network topological graph  〜 S310

Take neighboring service stations as end stations, and divide a service route in the network topological graph to generate a sub-route set  〜 S320

Determine a forward signal-to-noise ratio and a backward signal-to-noise ratio of a sub-route in the sub-route set as signal-to-noise ratio of an aggregated optical amplifier corresponding to the sub-route  〜 S330

Determine a forward signal-to-noise ratio of the temporary route according to a calculation formula for forward signal-to-noise of the temporary route and the forward signal-to-noise ratio of the sub-route  〜 S340

Determine a backward signal-to-noise ratio of the temporary route according to a calculation formula for backward signal-to-noise of temporary route and the backward signal-to-noise ratio of the sub-route  〜 S350

Determine a range for a relay configuration according to the signal-to-noise ratio of the aggregated optical amplifier corresponding to the temporary route, so as to determine a target service station for relay configuration within the range according to the signal-to-noise ratio of a hybrid-path optical amplifier corresponding to the temporary route  〜 S360

FIG. 3

Determine a signal-to-noise ratio of an aggregated optical amplifier corresponding to a sub-route in the network topological graph is according to an acquired network topological graph

S410

Determine a signal-to-noise ratio of an aggregated optical amplifier corresponding to a temporary route according to the signal-to-noise ratio of the aggregated optical amplifier corresponding to the sub-route

S420

Determine, if the signal-to-noise ratio of the aggregated optical amplifier of a current temporary route satisfies a first preset condition, a range for a relay configuration according to service stations contained in the current temporary route; or otherwise, determine service stations contained in the network topological graph as the range for the relay configuration

S430

Remove, if the signal-to-noise ratio of the aggregated optical amplifier of the current temporary route within the range satisfies the first preset condition and the temporary route set corresponding to the current temporary route satisfies a second preset condition, the last sub-route in the current temporary route set, to generate a new temporary route

S440

Determine, if the signal-to-noise ratio of the hybrid-path optical amplifier of the new temporary route satisfies a third preset condition, an ending point of the new temporary route as a target service station

S450

Take the target service station as the starting station, and repetitively perform the process of determining the temporary route and the target service station until the ending point of the service route in the network topological graph is reached

S460

FIG. 4

15

510

520

530

| Sub-route signal-to-noise ratio determination module | Temporary route signal-to-noise ratio determination module | Target service station determination module |

FIG. 5

620

Memory

Input device — 630

Output device — 640

Processor

610

FIG. 6

**INTERNATIONAL SEARCH REPORT**

| International application No. |
|---|
| **PCT/CN2020/128439** |

| | |
|---|---|
| **A.** | **CLASSIFICATION OF SUBJECT MATTER** |
| | H04B 10/293(2013.01)i |

According to International Patent Classification (IPC) or to both national classification and IPC

| | |
|---|---|
| **B.** | **FIELDS SEARCHED** |

Minimum documentation searched (classification system followed by classification symbols)

    H04B; H04J; H04L

Documentation searched other than minimum documentation to the extent that such documents are included in the fields searched

Electronic data base consulted during the international search (name of data base and, where practicable, search terms used)

    CNPAT, CNKI, WPI, EPODOC: 中继, 再生, 波分复用, 路由, 放大器, 信噪比, 光信噪比, WDM, OSNR, SNR, relay, repeater, regenerative, wavelength division multiplexing, route, amplifier, optical, signal noise ratio

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | CN 1998166 A (ERICSSON AB) 11 July 2007 (2007-07-11)<br>description, page 4 line 1 to page 12 line 1 | 1-10 |
| A | CN 108631862 A (ZTE CORPORATION) 09 October 2018 (2018-10-09)<br>entire document | 1-10 |
| A | CN 101064568 A (HUAWEI TECHNOLOGIES CO., LTD.) 31 October 2007 (2007-10-31)<br>entire document | 1-10 |
| A | CN 109660298 A (ZTE CORPORATION) 19 April 2019 (2019-04-19)<br>entire document | 1-10 |
| A | CN 109889360 A (CHINA SOUTHERN POWER GRID CO., LTD. et al.) 14 June 2019<br>(2019-06-14)<br>entire document | 1-10 |
| A | US 2010129081 A1 (FUJITSU LIMITED) 27 May 2010 (2010-05-27)<br>entire document | 1-10 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 February 2021** | **09 February 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/128439**

| Patent document cited in search report | | | Publication date (day/month/year) | Patent family member(s) | | | Publication date (day/month/year) |
|---|---|---|---|---|---|---|---|
| CN | 1998166 | A | 11 July 2007 | WO | 2006008310 | A1 | 26 January 2006 |
| | | | | US | 2008144993 | A1 | 19 June 2008 |
| | | | | IT | MI20041481 | A1 | 22 October 2004 |
| | | | | EP | 1769596 | A1 | 04 April 2007 |
| | | | | JP | 2008507223 | A | 06 March 2008 |
| CN | 108631862 | A | 09 October 2018 | | None | | |
| CN | 101064568 | A | 31 October 2007 | | None | | |
| CN | 109660298 | A | 19 April 2019 | EP | 3696996 | A1 | 19 August 2020 |
| | | | | WO | 2019072203 | A1 | 18 April 2019 |
| CN | 109889360 | A | 14 June 2019 | | None | | |
| US | 2010129081 | A1 | 27 May 2010 | JP | 2010122548 | A | 03 June 2010 |

Form PCT/ISA/210 (patent family annex) (January 2015)